# FASCICULE DE BREVET EUROPEEN

(11) **EP 0 574 328 B1**
(45) Date de publication et mention de la délivrance du brevet: **25.02.1998**
(21) Numéro de dépôt: 93401509.0
(22) Date de dépôt: 11.06.1993
(51) Int. Cl.: B09B 3/00

(54) **Procédé de traitement et de neutralisation de déchets contenant des éléments pathogènes**
Verfahren zur Aufbereitung und Neutralisierung von Pathogene enthaltenden Abfällen
Method of treating and neutralizing wastes containing pathogens

(30) Priorité: 12.06.1992 FR 9207136
(43) Date de publication de la demande: 15.12.1993
(73) Titulaire: Vendrand, Jean-Paul, F-77590 Chartrettes (FR)
(72) Inventeur: Vendrand, Jean-Paul, F-77590 Chartrettes (FR)
(74) Mandataire: Lemoyne, Didier

(56) Documents cités:
- EP-A- 316 647
- WO-A-91/18672
- WO-A-92/04920
- DE-A- 1 959 420
- FR-A- 2 648 371
- US-A- 5 035 858
- PATENT ABSTRACTS OF JAPAN vol. 13, no. 336 (C-623)27 Juillet 1989 & JP-A-01 115 359 ( KURIMOTO LTD. ) 8 Mai 1989

## Description

La présente invention concerne un procédé de traitement et de neutralisation de déchets contenant notamment au moins un matériau plastique et des éléments pathogènes.

L'invention trouve une application particulière, mais non limitative, dans le domaine du traitement des déchets du type ordures ménagères, municipales ou hospitalières qui doivent être mises en décharge dans des centres d'enfouissement technique, en dehors de la partie soumise à incinération.

Par le terme "neutralisation", on entend dans le présent mémoire le piègeage, la destruction et/ou l'élimination des éléments pathogènes dans les déchets considérés.

De façon classique, les procédés de traitement de déchets, d'origine ménagère par exemple, comportent une étape de tri sélectif en vue d'éliminer desdits déchets les verres et matières vitrifiées, les éléments métalliques ainsi que les cartons non souillés. Ce tri préalable qui a pour but un recyclage de ces matériaux est réalisé à l'aide de machines connues mettant en oeuvre diverses techniques telles que l'effet de la gravité et l'action d'un champ magnétique. L'étape de tri sélectif est suivie d'une seconde étape de broyage grossier destiné à obtenir à partir des déchets bruts, qui ont été préalablement déverrés et déferraillés, des particules de résidus dont le diamètre moyen se situe entre 60 à 80 mm environ. Enfin, avant enfouissement dans des décharges appropriées, les déchets broyés tels que définis ci-dessus peuvent être conditionnés sous forme de boudins comprimés, conformément, par exemple, au procédé et à l'appareillage décrits dans le brevet français n° 2648371 qui prévoit notamment une enveloppe externe plastique pour lesdits boudins.

Toutefois, ces procédés de traitement connus présentent un certain nombre d'inconvénients. D'une part, ils ne permettent pas de neutraliser les éléments pathogènes contenus en particulier dans les déchets hospitaliers ou encore dans les déchets de végétaux, fruits, légumes et analogues. Or ces éléments pathogènes contribuent, après enfouissement, à une pollution importante des nappes phréatiques par percollation. D'autre part, la densité des déchets après traitement reste encore relativement faible, ce qui a pour conséquence qu'ils occupent un volume assez important, d'où une durée de vie limitée des centres d'enfouissement dans lesquels ils sont stockés.

D'autres procédés de traitement connus, décrits notamment, d'une part, dans le document abrégé du brevet japonais JP-A-1115359 et, d'autre part, dans le document DE-A-1959420, ont pour objet des procédés de traitement de déchets unitaires, le dispositif du document abrégé du brevet japonais JP-A-1115359 étant tel qu'on introduit des déchets dans un dispositif comprenant une ou deux vis sans fin, ces vis broyant lesdits déchets et les amenant vers un point de sortie où ils sont compressés, ledit dispositif étant chauffé par un dispositif de chauffage.

Aussi, un problème technique à résoudre par l'objet de la présente invention est de proposer un procédé de traitement et de neutralisation des déchets contenant notamment au moins un matériau plastique et des éléments pathogènes, comportant des étapes :
- de broyage grossier destiné à obtenir une réduction de volume des déchets,
- de séchage/pasteurisation desdits déchets ;
- de compression et de chauffage desdits déchets à une température de stérilisation des déchets et de fluage dudit matériau plastique afin d'obtenir un conditionnement des déchets en boudins sous la forme d'un amalgame dense du matériau plastique avec d'autres composants desdits déchets, ledit procédé devant permettre à la fois de détruire les germes présents dans lesdits éléments pathogènes, de réduire le volume des déchets en augmentant leur densité, et de régler ou d'ajuster la température à laquelle est effectuée l'étape de compression et de chauffage indépendamment de la température de séchage/pasteurisation de manière, notamment, qu'il ne se forme pas, au cours de l'étape de compression à chaud, de bulles de vapeur d'eau qui contribueraient à une augmentation du volume des déchets.

La solution au problème technique posé consiste, selon la présente invention, en ce que ledit procédé comprend
- l'introduction desdits déchets, ayant été soumis au séchage/pasteurisation, dans une machine de conditionnement par compression et chauffage.

Ainsi, au cours de l'étape de séchage/pasteurisation qui de façon classique peut être effectuée à une température d'au moins 90°C, la plus grande partie des microorganismes pathogènes, tels que les bactéries, est détruite. Il convient de signaler d'autre part qu'au cours de cette étape est chassée une grande partie de l'eau contenue dans les déchets.
Les déchets sont ensuite soumis à une opération de compression et de chauffage simultanés à une température permettant à la fois la stérilisation définitive de déchets, à savoir destruction des virus et des formes résistantes de bactéries, et le fluage des matériaux plastiques. Les déchets sont alors compactés jusqu'à une densité très élevée comprise entre 0,8 et 1,2 du fait du rôle de gangue joué par les matériaux plastiques à l'état de fluage et également du fait que, l'opération de séchage/pasteurisation ayant chassé la quasi-totalité l'eau contenue dans les déchets, il ne se forme plus, au cours de l'étape de compression à chaud, de bulles de vapeur d'eau qui contribueraient à une augmentation de volume et une diminution de densité des boudins finaux. On notera que la température à laquelle est effectuée l'étape de compression et de chauffage est essentiellement ajustable. En particulier, elle peut être adaptée au degrés de contamination des déchets traités. Pour des déchets hospitaliers, cette température sera relativement élevée, par contre, pour des ordures ménagères, elle pourra être plus basse dans la mesure où la plupart des éléments pathogènes auront été détruits au cours de l'étape de séchage/pasteurisation. La seule contrainte sur le choix de la température est qu'elle reste dans le domaine de fluage des matériaux plastiques, ce qui sera pratiquement toujours le cas compte tenu de la compatibilité entre température de stérilisation et température de fluage.

Outre la neutralisation ou destruction des éléments pathogènes, l'augmentation de la densité des déchets et leurs effets bénéfiques sur la pollution des eaux, ainsi que le gain de place au niveau des décharges, le procédé objet de l'invention offre d'autres avantages, tels que l'absence de fabrication de gaz en cours de stockage (méthanisation), l'absence d'émanation de mauvaises odeurs et un aspect des décharges non désagréable à l'oeil.

Dans le cas où lesdits déchets sont des déchets non hospitaliers, l'invention prévoit que l'étape de broyage grossier est précédée d'une étape de tri sélectif, destinée à éliminer desdits déchets des produits recyclables.

Enfin, il faut souligner un autre avantage important qui réside dans le fait que les déchets traités et neutralisés selon le procédé conforme à l'invention peuvent être utilisés comme combustible en remplacement du fuel.

La description qui va suivre en regard du dessin annexé, donné à titre d'exemple non limitatif, fera bien comprendre en quoi consiste l'invention et comment elle peut être réalisée.

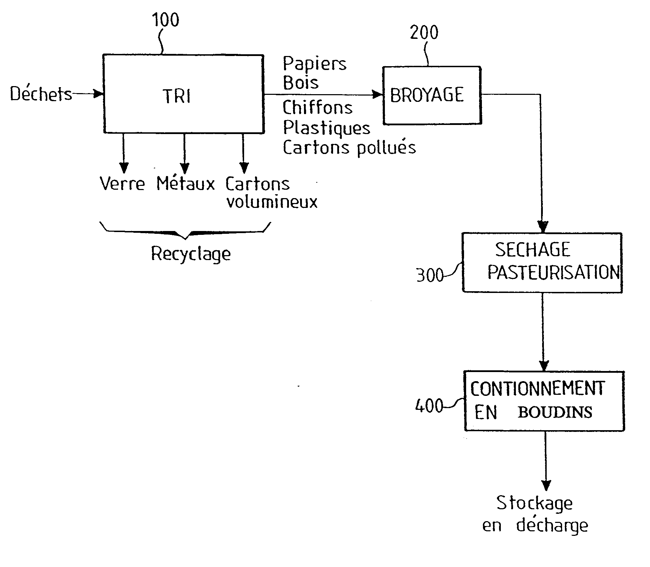

La figure 1 est un schéma illustrant les diverses étapes du procédé de traitement et de neutralisation conforme à l'invention.

Le procédé illustré sur la figure 1 a pour objet le traitement et la neutralisation de déchets industriels, hospitaliers ou autres, tels que les ordures ménagères classiques. De manière générale, ces déchets contiennent des éléments métalliques, du verre, des cartons, du papier, du bois, des chiffons, des matières plastiques, etc. Certains de ces constituants renferment des éléments pathogènes provenant principalement des déchets hospitaliers ou des déchets de produits alimentaires tels que végétaux, produits laitiers, viande, etc.

Comme le montre la figure 1, les déchets à traiter sont d'abord soumis à un tri préalable 100 qui a pour but essentiel de récupérer certains déchets en vue de leur recyclage. Il s'agit principalement des verres, triés par gravité, des éléments métalliques, triés magnétiquement ou par gravité, et des cartons volumineux, du type carton d'emballage. Bien entendu, dans le cas de déchets hospitaliers, cette étape de tri préalable n'est pas effectuée, la totalité des déchets devant être nécessairement traitée.

Les déchets restant, à savoir papiers, bois, cartons souillés, chiffons et matières plastiques, subissent ensuite une opération de broyage 200 de manière grossière afin de réduire le volume desdits déchets en obtenant des masses de granulométrie déterminée, comprise entre 60 et 80 mm environ.

Ainsi qu'on peut le voir sur la figure 1, les déchets ainsi broyés sont soumis à une opération de séchage/pasteurisation 300 dans une étuve à une température d'au moins 90°C pendant environ 7 mn. Au cours de cette opération, la plupart des microorganismes pathogènes de type bactéries, présents dans les déchets sont détruits de même qu'est éliminée la vapeur d'eau qu'ils contiennent.

Enfin, les déchets sortant de l'étuve de séchage/pasteurisation sont introduits dans une machine permettant un conditionnement 400 par compression et chauffage sous forme de boudins de 70 mm de diamètre sur 40 cm de longueur par exemple. Une machine de ce type est décrite en détail dans le brevet français publié n° 2648371. De manière avantageuse, le chauffage s'effectue à une température de stérilisation des déchets et de fluage des matériaux plastiques, c'est-à-dire entre 200 et 400 °C, ce qui permet, d'une part, d'achever la destruction des éléments pathogènes encore présents, à savoir virus et formes résistantes des bactéries, et, d'autre part, d'obtenir un amalgame très compact des matériaux plastiques et des autres composants des déchets. Comme cela a été rappelé plus haut, la température de l'étape de compression et de chauffage peut être adaptée aux déchets traités, ce qui rend le procédé de l'invention très souple et flexible. En particulier, pour des déchets non hospitaliers, cette température pourra être relativement basse, d'où une économie d'énergie réalisée.

La densité atteinte pour lesdites rondelles, entre 0,8 et 1,2, est d'autant plus grande que du fait de l'élimination préalable de la vapeur d'eau au cours de l'étape de séchage/pasteurisation, il ne peut se former de bulles indésirables qui viendraient augmenter le volume des rondelles, et donc en diminuer la densité.

Le dispositif de mise en oeuvre du procédé de l'invention est constitué d'une machine de tri sélectif, d'un broyeur, d'une étuve de pasteurisation et d'une machine de conditionnement par compression et chauffage. De manière avantageuse, ce dispositif peut être installé dans un local étanche, isolé de tous autres locaux, en béton par exemple, et muni de moyens de décontamination par jet de vapeur. On assure ainsi la sécurité vis à vis de la prolifération des éléments pathogènes que l'on veut neutraliser. A la fin de chaque journée de traitement, les moyens de décontanimation par jet de vapeur sont mis en oeuvre pour assurer la stérilité du local jusqu'au lendemain.

On a ainsi décrit un procédé de traitement des déchets permettant à la fois leur conditionnement et la neutralisation des élements pathogènes qu'ils contiennent par la mise en oeuvre de deux étapes complémentaires l'une par rapport à l'autre et intervenant chacune dans les mécanismes conduisant au conditionnement et à la neutralisation , à savoir une première étape de séchage/pasteurisation assurant une pré-stérilisation et l'élimination de l'eau présente dans les déchets, favorable au conditionnement ultérieur, et une deuxième étape de stérilisation/fluage à température adaptée aux déchets traités, au cours de laquelle la neutralisation est achevée tout en garantissant un compactage maximum dû au fluage des matières plastiques et à l'absence d'eau susceptible de produire des bulles de vapeur.

## Revendications

1. Procédé de traitement et de neutralisation de déchets contenant notamment au moins un matériau plastique et des éléments pathogènes, comportant des étapes :
- de broyage grossier (200) destiné à obtenir une réduction de volume des déchets ;
- de séchage/pasteurisation (300) desdits déchets ;
et
- de compression et de chauffage desdits déchets à une température de stérilisation des déchets et de fluage dudit matériau plastique afin d'obtenir un conditionnement (400) des déchets en boudins sous la forme d'un amalgame dense du matériau plastique avec d'autres composants desdits déchets ; et caractérisé en ce que:
- lesdits déchets, après avoir été soumis au séchage/pasteurisation, sont introduits dans une machine de conditionnement par compression et chauffage.

2. Procédé selon la revendication 1, caractérisé en ce que, lesdits déchets étant des déchets non hospitaliers, l'étape de broyage grossier (200) et précédée d'une étape de tri sélectif (100) préalable, destinée à éliminer desdits déchets des produits recyclables.

3. Dispositif pour la mise en oeuvre du procédé selon l'une des revendications 1 ou 2, caractérisé en ce qu'il comporte une machine de tri sélectif, un broyeur, une étuve de pasteurisation, et une machine de conditionnement par compression et chauffage, installés dans un local isolé et étanche en béton, muni de moyens de décontamination par jet de vapeur.

4. Utilisation comme combustible des déchets traités et neutralisés selon le procédé des revendications 1 ou 2.

## Claims

1. A process for the treatment and neutralisation of waste, predominantly containing at least one type of plastic material and some pathogenic substances, consisting of the following stages:
- crude crushing (200), intended to achieve an overall reduction in waste volume;
- drying/pasteurising (300) of the said waste;
and
- compression and heating of the said waste to a temperature allowing sterilisation of the waste and flowing of the plastic material so that the waste may be processed into cylinders in the form of a dense amalgam of the plastic material with the other components of the said waste;
A characteristic of the process is that the said waste, having undergone drying/pasteurising is placed into a heat and pressure processing machine.

2. A process in accordance with claim 1, characterised by the fact that, where the said waste is non-hospital waste, the crude crushing stage (200) is preceded by a preliminary selective sifting stage (100), designed to remove the said waste from the recyclable material.

3. A machine for carrying out the process in accordance with one of claims 1 or 2, characterised by the fact that it consists of a selective sifting machine, a crusher, a steriliser, and a pressure and heat processing machine, installed in an isolated location, made watertight in concrete and fitted with a means of steam jet decontamination.

4. Usage as a fuel of the waste treated and neutralised using the process outlined in claims 1 and 2.

## Patentansprüche

1. Verfahren zur Aufbereitung und Neutralisierung von Abfällen, die insbesondere Kunststoff und Pathogene enthalten, umfassen die Schritte:
- Grobzerkleinerung (200) zur Verringerung des Abfallsvolumens;
- Trocknung/Pasteurisierung (300) der Abfälle;
und
- Verdichtung und Erhitzung der Abfälle auf eine Sterilisationstemperatur der Abfälle und Plastifizieren des Kunststoffmaterials, um die Aufbereitung der Abfälle als Würste in Form einer dichten innig vermischten Masse aus Kunststoffmaterial und anderen Bestandteilen dieser Abfälle zu erhalten, und ist dadurch gekennzeichnet, daß
- die Abfälle nach der Trocknung/Pasteurisierung in eine Vorrichtung zur Aufbereitung durch Verdichtung und Erhitzung eingeführt werden.

2. Verfahren nach Anspruch 1, dadurch gekennzeichnet, daß bei Abfällen, die andere als Krankenhausabfälle sind, die Grobzerkleinerung (200), der eine selektive Klassierung vorausgeht, dazu bestimmt ist, die recycelbaren Abfallprodukte auszuscheiden.

3. Vorrichtung zur Durchführung des Verfahrens nach Anspruch 1 oder 2, dadurch gekennzeichnet, daß sie eine selektive Klassiervorrichtung, eine Zerkleinerungsvorrichtung, eine Pasteurisationsvorrichtung und eine Vorrichtung zur Aufbereitung durch Druck und Hitze umfaßt, die an einem isolierten Ort aufgebaut und durch Beton abgekapselt ist und mit Mitteln zur Dekontaminierung durch Dampfstrahlen versehen ist.

4. Verwendung der nach Anspruch 1 oder 2 des Verfahrens behandelten und neutralisierten Abfälle als Brennmaterial.
